Europäisches Patentamt

European Patent Office

Office européen des brevets

(11) Numéro de publication: **0 021 440**
A1

## (12) DEMANDE DE BREVET EUROPEEN

(21) Numéro de dépôt: 80103651.8

(22) Date de dépôt: 27.06.80

(51) Int. Cl.³: **B 60 B 25/14**, B 60 B 3/16

(30) Priorité: 27.06.79 FR 7916615

(43) Date de publication de la demande: 07.01.81
Bulletin 81/1

(84) Etats contractants désignés: **AT BE DE GB IT NL**

(71) Demandeur: **Société anonyme dite : EMBUDEC,
103-105, Avenue du Président Wilson,
F-93100 Montreuil-sous-Bois (FR)**

(72) Inventeur: **Adam, François Jean Daniel, 2, rue Copernic,
F-91160 Longjumeau (FR)**

(74) Mandataire: **Casalonga, Alain, Bureau D.A. Casalonga
Lilienstrasse 77, D-8000 München 80 (DE)**

(54) **Jante de roue en deux parties pour bandage pneumatique à haute pression avec dispositif de sécurité.**

(57) Une couronne de sécurité (17) qui comporte des parties venant coiffer plus ou moins complétement les écrous d'assemblage (6) de manière à empêcher l'accès des outils de démontage à ces écrous d'assemblage, cette couronne (17) comportant d'autre part des perforations (18, 19) pour le passage des goujons de fixation (13) de manière à assurer sa propre fixation sur la jante uniquement par les écrous de fixation (14). En outre, cette couronne comporte avantageusement une patte perforée (22) à travers de laquelle passe la valve de gonflage (24) de manière que cette valve assure le verrouillage en place de la couronne tant que la valve ne peut pas être déplacée, c'est-à-dire tant que le dégonflage n'a pas été opéré.

0021440

1

Jante de roue en deux parties pour bandage pneumatique à haute pression avec dispositif de sécurité.

---

L'invention concerne les jantes en deux parties couramment utilisées pour les roues à bandage pneumatique à haute pression destinées à être fortement chargées, comme les roues d'engin de manutention ou autres applications.

Chacune des parties constitutives de la jante est constituée par une pièce emboutie en tôle épaisse comportant une partie sensiblement cylindrique formant la moitié de la largeur de la jante et prolongée vers l'extérieur par un rebord de retenue du pneumatique, et vers l'intérieur par un voile plan ajouré au centre pour le passage du moyeu et laissant subsister par conséquent un rebord interne annulaire. Les deux parties, accolées l'une à l'autre par leur rebord interne, sont assemblées entre elles par des boulons d'assemblage passant au travers d'une première série de perforations, l'ensemble étant d'autre part monté sur le moyeu et fixé sur celui-ci au moyen de goujons portés par le moyeu et traversant les deux bords internes accolés au travers d'une seconde série de perforations, la fixation étant assurée par des écrous de fixation, le plus souvent des écrous à portée sphérique, encore dénommées "cul d'oeuf".

Lorsqu'il s'avère nécessaire de changer une roue, il faut donc que l'opérateur dévisse tous les écrous de fixation, mais s'abstienne absolument de dévisser les écrous des boulons d'assemblage tant que le bandage pneumatique n'a pas été dégonflé, faute de quoi il en résulterait un accident généralement fatal par explosion du pneumatique. Or, les divers écrous de fixation et d'assemblage se présentent tous dans un ordre alterné face à l'opérateur, avec un aspect et des dimensions relativement voisines, au point que l'opérateur peut être tenté de dévisser en série tous ces écrous, ce qui explique que ce genre d'accident est relativement fréquent, et aucun dispositif n'a permis jusqu'à ce jour de l'éviter tout en conservant la possibilité de démonter les deux parties de jante pour changer de bandage.

Le but de l'invention est d'éliminer les inconvénients précédent en réalisant un dispositif qui, lorsqu'il est en place, interdise positivement le desserrage des écrous d'assemblage tant que les écrous de fixation n'ont pas été retirés, et même de préférence tant que la chambre à air n'a pas été dégonflée, avec de surcroit dans une variante un dispositif qui interdise la mise en place d'une nouvelle roue sans son dispositif de sécurité.

L'invention consiste à prévoir une couronne de sécurité qui comporte des parties venant coiffer plus ou moins complètement les écrous d'assemblage de manière à empêcher l'accès des outils de démontage à ces écrous d'assemblage, cette couronne comportant d'autre part des perforations pour le passage des goujons de fixation de manière à assurer sa propre fixation sur la jante uniquement par les écrous de fixation. En outre, cette couronne comporte avantageusement une patte perforée à travers de laquelle passe la valve de gonflage de manière que cette valve assure le verrouillage en place de la couronne tant que la valve ne peut pas être déplacée, c'est-à-dire tant que le dégonflage n'a pas été opéré. Dans une variante de réalisation, les orifices de fixation dans les rebords internes des deux parties de la jante ont un diamètre supérieur ou égal au diamètre de l'embase des écrous de fixation de manière à empêcher la fixation sur le moyeu de la jante sans sa couronne de sécurité, celle-ci comportant alors autour de chacun de ces orifices un rebord assurant le centrage de la couronne dans la jante, et une portée sphérique sur l'autre face pour assurer le centrage des écrous de fixation sur la couronne.

D'autres particularités de l'invention apparaîtront dans la description qui va suivre d'un mode de réalisation pris comme exemple et représenté sur le dessin annexé, sur lequel :

la fig. 1 est une coupe axiale d'un premier mode de réalisation;

la fig. 2 est une vue partielle de face de ce même mode de réalisation;

la fig. 3 est une coupe partielle selon III-III de la fig. 2;

la fig. 4 est une coupe axiale d'un deuxième mode de réalisation; et

la fig. 5 est une coupe partielle à plus grande échelle de ce deuxième mode de réalisation par l'axe de l'écrou de fixation.

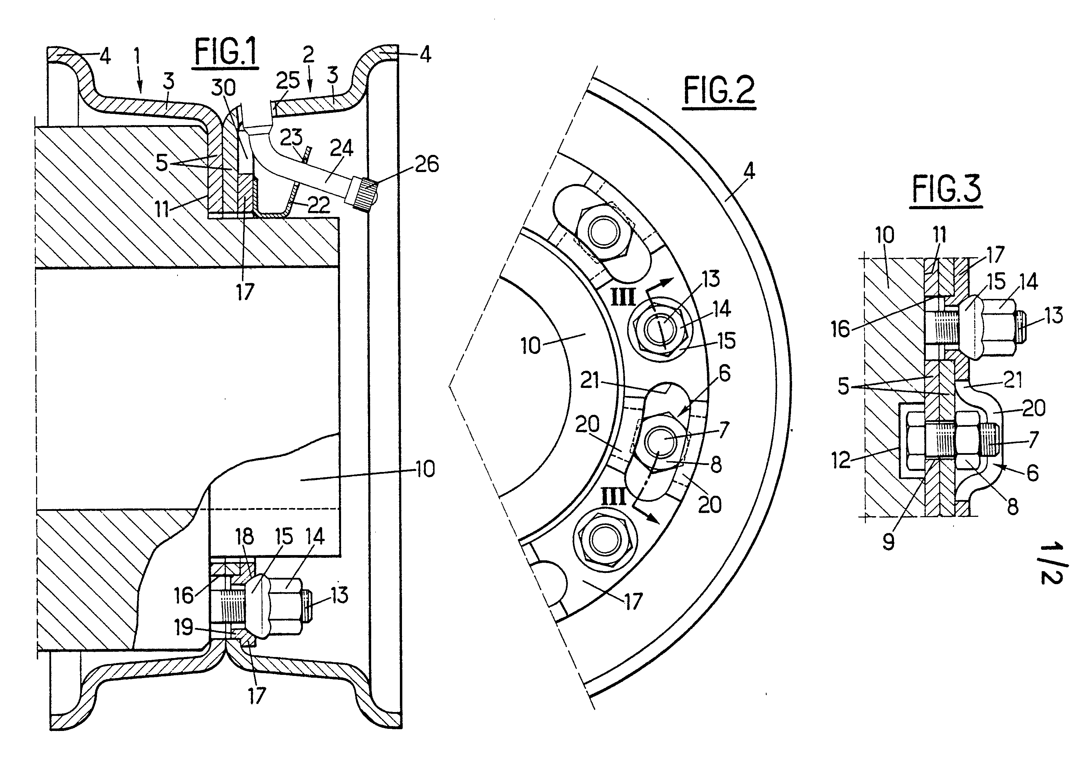

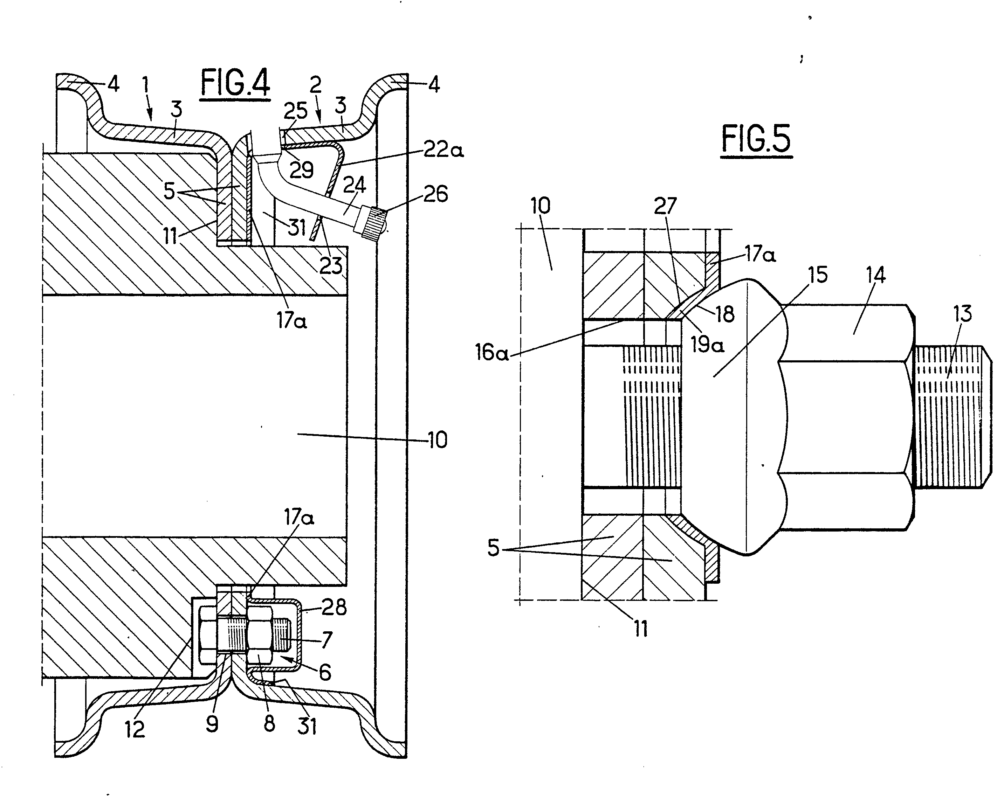

On voit sur la fig. 1 la jante en deux parties 1 et 2 comportant chacune une partie emboutie 3 sensiblement cylindrique prolongée vers l'extérieur par un bord de jante 4 et vers l'intérieur par un rebord interne 5. Le bandage pneumatique, non représenté, est destiné à venir se placer sur les deux parties cylindriques 3 et entre les bords de jante 4 tandis que les deux bords internes 5 s'appliquent l'un contre l'autre et sont solidement assemblés au moyen de boulons d'assemblage 6 constitués chacun d'une vis 7 et d'un écrou 8, les vis 7 traversant à la fois les deux bords internes 5 au travers de perforations appropriées 9 comme représenté sur la fig. 3.

La jante dans son ensemble est d'autre part fixée sur le moyeu 10 du véhicule ou de l'engin destiné à le recevoir, ce moyeu 10 tourillonnant autour d'une fusée non représentée et comportant en même temps le plus souvent le tambour de freinage. Ce moyeu comporte principalement un épaulement plan 11 servant d'appui pour les deux bords internes 5 de la jante et dans cet épaulement plan 11 sont pratiqués un certain nombre d'évidements 12 servant de dégagement pour les têtes des vis 7. Le moyeu 10 comporte d'autre part un certain nombre de goujons de fixation 13 permettant de fixer la jante sur le moyeu au moyen d'écrous de fixation 14, généralement du type à embase 15 en forme de zone sphérique et qui sont habituellement dénommés "cul d'oeuf". En plus des orifices d'assemblage 9, les deux rebords internes 5 comportent par conséquent un certain nombre d'orifices d'assemblage 16, intercalés avec les précédents, et permettant le passage des goujons 13.

Conformément à l'invention, la jante se complète par une couronne de sécurité 17 qui comporte sur sa face externe des centrages à portée sphérique 18 destinés à recevoir les zone sphériques 15 des écrous de fixation 14 et sur sa face interne des bords annulaires 19 venant se centrer à l'intérieur des orifices 16. D'autre part, la couronne 17 comporte des parties entourant les écrous d'assemblage 8 de manière à empêcher l'accès à ces écrous d'un outil de démontage. Dans l'exemple représenté sur la fig. 1, cet entourage des écrous 8 n'est que partiel et constitué par deux parties latérales 20 en forme de bande qui représentent ce qui reste de la couronne annulaire 17 après découpage d'orifices allongés 21, et ces parties 20 sont cambrées en forme de pontet comme représenté sur la fig. 3 de manière à contourner l'encombrement des écrous 8 tout en laissant entre elles le passage pour l'extrémité de la vis 7.

Pour éviter que, lors de la fixation de la jante sur le moyeu 10, l'opérateur puisse omettre de placer la couronne de sécurité 17, il est avantageux de donner aux orifices 16 de passage des goujons de fixation 13 un diamètre égal ou légèrement supérieur à celui de l'embase 15 des écrous 14, ce qui rend positivement tout montage impossible en l'absence de la couronne 17. Lors du démontage de cette roue de sur son moyeu 10, il devient donc impossible d'atteindre les écrous 8 des boulons d'assemblage et l'on est obligé de démonter d'abord les écrous 14 qui permettent de retirer la roue, ce qui évite donc toute confusion et manoeuvres intempestives selon le premier but poursuivi.

Toutefois, une fois la roue déposée et la couronne 17 enlevée, il demeure possible de démonter les boulons de fixation 6 sans avoir procédé au dégonflage de la roue, de sorte que le danger d'explosion subsiste.

Pour l'éviter, on prévoit conformément à l'invention, une patte de sécurité 22 qui est solidaire de la couronne 17, par exemple par soudure, et qui comporte un orifice 23 pour le passage de la valve de gonflage 24 qui fait partie de la chambre à air et traverse la partie 2 de la jante à travers une perforation 25. Dans ce cas, le retrait de la couronne de sécurité 17 impose d'une part le retrait du capuchon de valve 26 et d'autre part la manoeuvre de la valve vers l'intérieur de l'orifice 25 pour dégager la patte 22, donc par conséquent le dégonflage de la chambre.

Naturellement, pour que cette patte de sécurité remplisse son office, il est nécessaire que l'on ne puisse pas la placer ailleurs qu'en face du trou 25. Ceci est obtenu à l'aide d'une encoche de détrompage 30 ménageant le passage du coude de la valve 24 en profitant de l'épaisseur de la couronne 17. En variante, il est possible également de prévoir un ergot de détrompage dans le bord 5 de la demi-jante 2 et un orifice correspondant dans la couronne 17, ou inversement, pour empêcher un positionnement angulaire incorrect.

On a donc la sécurité absolue recherchée moyennant l'addition d'une pièce 17 relativement économique. En effet, les portées sphériques 18 et les rebords intérieurs 19 de cette pièce peuvent être obtenus simultanément par déformation selon le procédé décrit dans le brevet français n° 2.276.889 au nom de la demanderesse. En contrepartie, on voit que les rebords internes 5 sont dispensés de la réalisation de ces portées sphériques.

Le deuxième exemple de réalisation, représenté sur les fig. 4 et 5, est plus particulièrement destiné à être rapporté sur les jantes déjà existantes. Dans ce cas, les orifices 16a des rebords internes 5 ont la taille usuelle, c'est-à-dire sont plus petits que l'embase 15 des écrous 14, et le rebord 5 de la partie 2 qui comporte l'orifice de valve 25 comporte déjà une surface de centrage à portée sphérique 27 dont la sphéricité correspond à celle de l'embase 15. Dans ce cas, la couronne de sécurité 17a peut être plus avantageusement réalisée en tôle plus mince et déformée comme précédemment pour réaliser la portée sphérique 18 destinée à recevoir l'embase 15 et en même temps le rebord 19a qui est cette fois sphérique et qui permet de centrer la couronne 17a sur les centrages 27. Etant donné que les deux surfaces 27 et 18 sont des sphères de même rayon simplement décalées de l'épaisseur de la couronne 17a, la partie comprise entre ces deux surfaces est à épaisseur variable.

Dans ce cas, les parties de la couronne entourant les écrous 8 peuvent avantageusement être réalisées par emboutissage pour former des dômes cylindriques 28 comme représenté sur la fig. 4, ce que permet plus facilement l'épaisseur relativement plus faible de la couronne. De même la patte de sécurité 22a qui joue le même rôle que la patte 22 précédente peut avantageusement dans ce cas être réalisée d'une seule pièce avec la couronne et comporter en plus de l'orifice 23 un deuxième orifice 29 se plaçant en regard de l'orifice 25 et assurant un verrouillage encore plus rigoureux.

Cet orifice 29 peut jouer en même temps le rôle de l'encoche de détrompage 30 de l'exemple précédent à condition de munir la couronne 17a d'un rebord circulaire continu 31 compensant l'épaisseur relativement plus faible de cette couronne.

Naturellement, dans ce deuxième cas et contrairement au précédent, il est possible d'omettre la mise en place de la couronne de sécurité lors du montage de la roue sur le moyeu 10 puisque ce montage se fait déjà sans cette couronne. A cette différence près, le fonctionnement et les avantages exposés plus haut restent valables.

Bien que dans les deux exemples représentés, les jantes soient symétriques et réalisées à l'aide de deux parties embouties sensiblement identiques, il est clair que l'invention s'appliquerait identiquement et sans aucune modification à des jantes décalées de forme disymétrique et constituées à partir de deux parties embouties de profondeurs différentes.

REVENDICATIONS

1. Jante en deux parties pour roue à bandage pneumatique à haute pression avec chambre à air du type constitué par deux parties accolées par leur rebord interne, assemblées entre elles par des boulons d'assemblage traversant une série d'orifices d'assemblage pratiqués dans ce rebord interne, et se fixant sur le moyeu de la roue au moyen de goujon de fixation traversant ces rebords internes à travers une autre série d'orifices de fixation et recevant des écrous de fixation à embase, caractérisée par le fait que la jante comporte en outre une couronne de sécurité recouvrant au moins partiellement les rebords internes sur le côté opposé au moyeu, cette couronne comportant d'une part des parties entourant les écrous des boulons d'assemblage de manière à empêcher l'accès à ces écrous d'un outil de démontage, et d'autre part, des orifices de fixation entourant les goujons de fixation et comportant sur la face côté moyeu des bords en saillie se centrant dans les orifices de fixation des rebords internes de la jante, et sur la face externe des surfaces de centrage pour lesdites embases.

2. Jante selon la revendication 1, caractérisée par le fait que ladite couronne de sécurité est solidaire d'une patte de sécurité comportant au moins un orifice pour le passage de la valve de ladite chambre à air et disposé de telle manière que ladite valve verrouille la couronne en place tant que la pression subsiste dans la chambre à air.

3. Jante selon l'une quelconque des revendications précédentes, caractérisée par le fait que lesdits orifices de fixation ont un diamètre égal ou légèrement supérieur à celui desdites embases, que lesdits rebords ont une forme extérieure cylindrique se centrant dans lesdits orifices, et que lesdites embases sont du type à portée sphérique.

4. Jante selon l'une quelconque des revendications 1 et 2, caractérisée par le fait que lesdits orifices de fixation des rebords internes ont les dimensions habituelles et se terminent de manière usuelle du côté extérieur par une surface sphérique pour le centrage desdites embases également du type à portée sphérique, et que les parties de la couronne de sécurité entourant les goujons de fixation présentent une forme à épaisseur variable comprise entre deux zones sphériques de même rayon décalées de l'épaisseur de la couronne.

5. Jante selon l'une quelconque des revendications précédentes, caractérisée par le fait que les parties entourant les écrous d'assemblage sont constituées chacune par deux parties latérales de la couronne circulaire restant après découpage d'un orifice allongé, ces parties étant cambrées en forme de pontet pour entourer l'écrou, tandis que l'extrémité de la vis correspondante passe entre ces deux parties.

6. Jante selon l'une quelconque des revendications 1 à 4, caractérisée par le fait que lesdites parties de la couronne de sécurité entourant les écrous d'assemblage sont constituées par des emboutis sensiblement cylindrique.

7. Jante selon l'une quelconque des revendications précédentes, caractérisée par le fait qu'elle comporte un dispositif de détrompage n'autorisant le montage de la couronne sur la demi-jante extérieure que dans une seule position angulaire relative, dispositif constitué par un dégagement pratiqué dans une de ces pièces pour coopérer avec une saillie portée par l'autre.

8. Jante selon la revendication 7, caractérisée par le fait que la saillie est constituée par la valve et que le dégagement est une encoche ou un orifice de détrompage pratiqué dans l'épaisseur ou dans un rebord de la couronne.

FIG.3

FIG.2

FIG.1

# RAPPORT DE RECHERCHE EUROPEENNE

**Office européen des brevets**

002.1440

Numéro de la demande

EP 80 10 3651

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | US - A - 2 798 770 (TERRICK)<br><br>* Colonne 1, ligne 15 - colonne 2, ligne 67; figures 1-7,11,12 *<br>-- | 1,5 | B 60 B 25/14<br>3/16 |
| A | CH - A - 121 689 (PORETTI)<br><br>* Page 1, colonne de gauche, ligne 1 - page 2, colonne de gauche, ligne 11; figures 1,2,4 *<br>-- | 1,4 | |
| A | FR - E - 41 574/FR - A - 732 664 (MESSIER)<br><br>* Page 1, ligne 50 - page 2, ligne 4; page 2, lignes 28-37; figures 2,4 *<br>-- | 1 | **DOMAINES TECHNIQUES RECHERCHES (Int. Cl. 3)**<br><br>B 60 B |
| A | FR - A - 713 453 (OETIKER)<br><br>* Page 1, ligne 42 - page 2, ligne 13; figures 1-3 *<br>---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 26.08.1980 | AYITER |

OEB Form 1503.1   06.78